(19) Europäisches Patentamt
European Patent Office
Office européen des brevets

(11) **EP 2 642 698 A1**

(12) **EUROPÄISCHE PATENTANMELDUNG**

(43) Veröffentlichungstag:
**25.09.2013 Patentblatt 2013/39**

(51) Int Cl.:
***H04L 12/40*** *(2006.01)*

(21) Anmeldenummer: **12161023.2**

(22) Anmeldetag: **23.03.2012**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **Siemens Aktiengesellschaft
80333 München (DE)**

(72) Erfinder:
• **Premke, Markus
93055 Regensburg (DE)**
• **Wolski, Jürgen
91247 Vorra (DE)**

(54) **AS-i Vorrichtung und System**

(57) Die Erfindung betrifft eine Vorrichtung (3) für ein AS-i System mit einem ersten AS-i Master (4). Um das AS-i System zu verbessern, insbesondere die Länge des AS-i Systems zu vergrößern, wird vorgeschlagen, dass die Vorrichtung (3) einen ersten und einen zweiten Anschluss (1,2) umfasst und innerhalb des AS-i Systems für einen am ersten Anschluss (1) angeschlossenen nachgeschalteten AS-i Slave (5,6) ein zweiter ASi Master (31) und für den am zweiten Anschluss (2) angeschlossenen ersten AS-i Master (4) ein AS-i Slave (32) ist, wobei die Vorrichtung (3) derart ausgebildet ist, dass sie den mit ihr über den ersten Anschluss (1) verbundenen nachgeschalteten AS-i Slave (5,6) über den zweiten Anschluss (2) als AS-i Slave (32) repräsentiert.

**Beschreibung**

Die Erfindung betrifft eine Vorrichtung für ein AS-i System mit einem ersten AS-i Master.

Das AS- i System (AS- i = Actuator- Sensor-Interface) ist ein industrielles Feldbussystem auf der unteren Steuerungsebene eines Automatisierungssystems, das eine Vielzahl von Feldgerätebaugruppen wie Messfühler (Sensoren) , Stellglieder und Antriebe (Aktoren) , aber auch Motorstarter und Frequenzumrichter mit einem übergeordneten Steuergerät verbindet. Das AS-i System ist somit ein Kommunikationsstandard zur Kommunikation zwischen einer mit dem Steuerungsgerät verbundenen Masterbaugruppe (AS- i Master) und AS- i Slaves. Feldgerätebaugruppen, welche mit einem AS- i Slave verbunden sind, können somit über den AS- i Master angesteuert und/ oder ausgelesen werden.

Bei einem nach den AS-interface Spezifikationen ausgebildeten Kommunikationssystem sendet der AS-i Master zyklisch an alle AS-i Slaves eine Anfrage, woraufhin die AS-i Slaves antworten. Auf diese Weise tauscht der AS-i Master mit den AS-i Slaves Daten über ein Übertragungsprotokoll mit einer definierten Nutzdatenbreite aus. Jedem der AS-i Slaves ist dazu eine eindeutige Adresse zugewiesen. Innerhalb eines AS-i Systems ist die Anzahl an verfügbaren Adressen für die AS-i Slaves eines AS-i Systems begrenzt. Die Länge das AS-i Systems, d.h. die maximale Länge einer AS-i Leitung zwischen dem AS-i Master und dem AS-i Slave, ist ebenso begrenzt.

Eine Aufgabe der vorliegenden Erfindung ist es das AS-i System zu verbessern. Insbesondere soll die Länge des AS-i Systems vergrößert werden.

Diese Aufgabe wird gelöst durch eine Vorrichtung gemäß Anspruch 1, d.h. durch eine Vorrichtung für ein AS-i System mit einem ersten AS-i Master, wobei die Vorrichtung einen ersten und einen zweiten Anschluss umfasst und innerhalb des AS-i Systems für einen am ersten Anschluss angeschlossenen nachgeschalteten AS-i Slave ein zweiter AS-i Master und für den am zweiten Anschluss angeschlossenen ersten AS-i Master ein AS-i Slave ist, wobei die Vorrichtung derart ausgebildet ist, dass sie den mit ihr über den ersten Anschluss verbundenen nachgeschalteten AS-i Slave über den zweiten Anschluss als AS-i Slave repräsentiert.

Vorteilhafte Weiterbildungen der Erfindung sind in den abhängigen Ansprüchen 2 bis 6 angegeben.

Vorzugsweise werden über den ersten Anschluss mehrere nachgeschaltete AS-i Slaves mit der Vorrichtung verbunden, so dass die Vorrichtung für alle nachgeschalteten AS-i Slaves, welche mit dem ersten Anschluss verbunden sind ein AS-i Master (zweiter AS-i Master) ist. Die Vorrichtung repräsentiert vorzugsweise alle über den ersten Anschluss angeschlossene nachgeschaltete AS-i Slaves über den zweiten Anschluss als AS-i Slave. Hierbei werden vorzugsweise die nachgeschalteten Slaves jeweils über den zweiten Anschluss als separate AS-i Slaves für den ersten AS-i Master repräsentiert.

Das AS-i System umfasst somit zwei AS-i Master, nämlich den ersten AS-i Master und die Vorrichtung als zweiter AS-i Master in Hinblick auf seinen ersten Anschluss. Innerhalb des AS-i Systems bildet die Vorrichtung für den/die über den ersten Anschluss mit ihr verbundenen nachgeschalteten AS-i Slave/-s die Funktion eines AS-i Masters (als zweiter AS-i Master) vollständig ab. Der bzw. die nachgeschalteten AS-i Slaves kommunizieren mit der Vorrichtung, wie sie üblicherweise mit einem AS-i Master kommunizieren. Für den ersten AS-i Master, mit welchem die Vorrichtung über den zweiten Anschluss verbunden ist, ist die Vorrichtung selbst mindestens ein AS-i Slave und repräsentiert den bzw. die mit ihr über den ersten Anschluss verbundenen AS-i Slaves vorzugsweise jeweils als AS-i Slave. Die Vorrichtung ist somit im laufenden Betrieb sowohl ein AS-i Master (über den zweiten Anschluss) als auch mindestens ein AS-i Slave (über den ersten Anschluss). Die Zuordnung des/der nachgeschalteten AS-i Slave/-s zu den über den zweiten Anschluss emulierten AS-i Slave/-s ist in der Vorrichtung hinterlegt. Die Kommunikation der Vorrichtung mit dem/den nachgeschalteten AS-i Slave/-s und dem ersten AS-i Master erfolgt unabhängig voneinander; d.h. zur Kommunikation können unterschiedliche AS-i Adressen und/oder Kommunikationskanäle verwendet werden.

Durch den Einsatz der erfindungsgemäßen Vorrichtung kann die Länge des AS-i Systems vergrößert, insbesondere verdoppelt, werden.

In einer vorteilhaften Ausführungsform der Erfindung repräsentiert die Vorrichtung über den zweiten Anschluss jeweils den mit ihr über den ersten Anschluss verbundenen nachgeschalteten AS-i Slave als separaten AS-i Slave. Die nachgeschalteten AS-i Slaves werden vorzugsweise vollständig als AS-i Slaves während eines Kommunikationszyklus des ersten (vorgeschalteten) AS-i Masters durch die Vorrichtung selbst abgebildet/emuliert. Sind z.B. am ersten Anschluss sieben ASi Slaves angeschlossen, so repräsentiert die Vorrichtung über den zweiten Anschluss für den ersten AS-i Master sieben AS-i Slaves, welche innerhalb eines Kommunikationszyklus des AS-i Masters angesprochen/abgefragt werden.

Vorzugsweise wird in einem ersten vorgeschalteten Kommunikationszyklus des ersten AS-i Masters zunächst die Vorrichtung, stellvertretend für die nachgeschalteten AS-i Slaves mit Nutzdaten vom ersten AS-i Master versorgt.

Diese Nutzdaten werden von der Vorrichtung empfangen und als zweiter AS-i Master an die nachgeschalteten AS-i Slaves in einem separaten ersten nachgeschalteten Kommunikationszyklus (dem des zweiten AS-i Masters) weitergegeben. Während des ersten nachgeschalteten Kommunikationszyklus des zweiten AS-i Masters werden die Nutzdaten der nachgeschalteten AS-i Slaves eingelesen.

Während eines zweiten vorgeschalteten Kommunikationszyklus des ersten AS-i Masters werden die eingelesenen Nutzdaten der nachgeschalteten AS-i Slaves durch die Vorrichtung an den ersten AS-i Masters ausgegeben.

Für die Kommunikation mit dem ersten AS-i Master nutzt die Vorrichtung vorzugsweise je nachgeschalteten AS-i Slave eine separate AS-i Adresse. Die AS-i Adresse kann unabhängig von der innerhalb der nachgeschalteten Kommunikation verwendeten AS-i Adresse sein. Gleiches gilt für den verwendeten Kommunikationskanal.

In einer vorteilhaften Ausführungsform der Erfindung gibt die Vorrichtung über den ersten Anschluss eingehende Nutzdaten eines Telegramms des nachgeschalteten AS-i Slaves unverändert als AS-i Slave über den zweiten Anschluss aus. Für die Kommunikation zwischen der Vorrichtung (als AS-i Slave) und dem ersten AS-i Master ist die Vorrichtung nicht an den für die Kommunikation zwischen der Vorrichtung (als AS-i Master) und dem nachgeschalteten AS-i Slave verwendeten Kanal und/oder an die verwendete AS-i Adresse gebunden. Die Kommunikation zwischen der Vorrichtung und dem nachgeschalteten AS-i Slave /den nachgeschalteten AS-i Slaves erfolgt autark zur Kommunikation zwischen dem ersten AS-i Master und der Vorrichtung.

In einer vorteilhaften Ausführungsform der Erfindung gibt die Vorrichtung über den zweiten Anschluss eingehende Nutzdaten eines Telegramms des ersten AS-i Masters unverändert als zweiter AS-i Master über den ersten Anschluss aus. Das Telegramm wird insbesondere an den zugeordneten nachgeschalteten AS-i Slave ausgegeben. Die Vorrichtung ist für die Kommunikation zwischen ihr und dem nachgeschalteten AS-i Slave nicht an den zwischen dem ersten AS-i Master und der Vorrichtung (als AS-i Slave) verwendeten Kanal und/oder an die verwendete AS-i Adresse gebunden. Die Kommunikation zwischen der Vorrichtung (als AS-i Slave) und dem AS-i Master erfolgt autark zur Kommunikation zwischen dem AS-i Slave und der Vorrichtung (als zweiter AS-i Master).

In einer weiteren vorteilhaften Ausführungsform der Erfindung verwendet die Vorrichtung bei einer Kommunikation mit dem zu repräsentierenden AS-i Slave eine unterschiedliche AS-i Adresse und/oder einen unterschiedlichen AS-i Kanal als bei einer Kommunikation mit dem ersten AS-i Master hinsichtlich des zu repräsentierenden AS-i Slaves.

In einer weiteren vorteilhaften Ausführungsform der Erfindung umfasst das AS-i System einen ersten AS-i Master, mindestens einen nachgeschalteten AS-i Slave und die Vorrichtung, wobei die Vorrichtung für den an den ersten Anschluss angeschlossenen mindestens einen nachgeschalteten AS-i Slave ein zweiter AS-i Master und für den an den zweiten Anschluss angeschlossenen ersten AS-i Master ein AS-i Slave ist, wobei die Vorrichtung über den zweiten Anschluss den mit ihr über den ersten Anschluss verbundenen mindestens einen nachgeschalteten AS-i Slave als AS-i Slave repräsentiert. Die Vorrichtung repräsentiert insbesondere je am ersten Anschluss angeschlossenen nachgeschalteten AS-i Slave über den zweiten Anschuss einen AS-i Slave für den "vorgeschalteten" ersten AS-i Master.

Im Folgenden werden die Erfindung und Ausgestaltungen der Erfindung anhand des in der Figur dargestellten Ausführungsbeispiels näher beschrieben und erläutert.

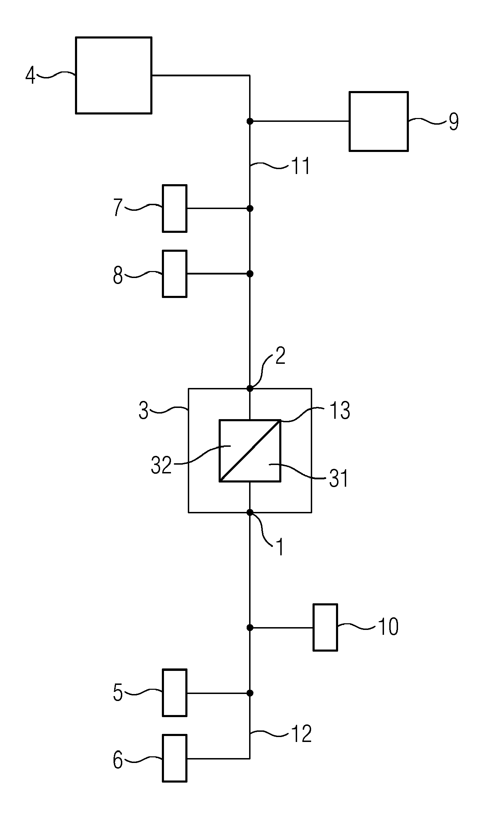

Figur 1 zeigt ein AS-i System mit einem ersten AS-i Master 4, einem ersten AS-i Netzteil 9, einem ersten und zweiten vorgeschalteten AS-i Slave 7,8, einer AS-i Vorrichtung 3, einem zweiten AS-i Netzteil 10 und einem ersten und zweiten nachgeschalteten AS-i Slave 5,6. Die AS-i Vorrichtung 3 umfasst einen ersten Anschluss 1, einen zweiten Anschluss 2 und eine Verarbeitungseinheit 13.

Mittels einer ersten AS-i Leitung 11 ist der erste AS-i Master 4 mit dem ersten Netzteil 9, dem ersten und zweiten vorgeschalteten AS-i Slave 7,8 und dem zweiten Anschluss 2 der AS-i Vorrichtung 3 verbunden. Mittels einer zweiten AS-i Leitung 12 ist die AS-i Vorrichtung 3 über ihren ersten Anschluss 1 mit dem zweiten Netzteil 10 und dem ersten und zweiten nachgeschalteten AS-i Slave 5,6 verbunden.

Durch den Einsatz der AS-i Vorrichtung 3 liegt ein vorgeschaltetes AS-i Teilsystem und ein nachgeschaltetes AS-i Teilsystem vor, wodurch das AS-i System gebildet wird. Hierdurch kann die Länge des gesamten AS-i Systems vergrößert, insbesondere verdoppelt, werden. Im vorgeschalteten AS-i System wird die AS-i Vorrichtung 3 vom ersten AS-i Master 4 als AS-i Slave 32 wahrgenommen. Dieser AS-i Slave 32 kann mehrere AS-i Adressen einnehmen, so dass er für den ersten AS-i Master 4 in Abhängigkeit der Anzahl der eingenommen AS-i Adressen innerhalb eines Kommunikationszyklus des ersten AS-i Masters 4 mehrere AS-i Slaves repräsentieren kann. Der AS-i Slave 32 ist somit ein Slaveemulator, welcher zeitgleich, d.h. innerhalb eines Kommunikationszyklus, mehrere Slaves gegenüber dem ersten AS-i Master 4 darstellen kann.

Im nachgeschalteten AS-i System wird die AS-i Vorrichtung 3 vom ersten und zweiten nachgeschalteten AS-i Slave 5,6 als AS-i Master 31 (zweiter AS-i Master) wahrgenommen. Da an der Vorrichtung 3 zwei nachgeschaltete Slaves 5,6 angeschlossen sind repräsentiert die Vorrichtung 3 im vorgeschalteten System für den ersten AS-i Master 4 zwei AS-i Slaves über den zweiten Anschluss. Die Verarbeitung der an dem ersten und zweiten Anschluss 1,2 eingehenden Signale erfolgt durch die Verarbeitungseinheit 13 der AS-i Vorrichtung 3. Die Verarbeitungseinheit 13 repräsentiert über den ersten Anschluss 1 den zweiten AS-i Master 31 und über den zweiten Anschluss 2 die nachgeschalteten AS-i Slaves 5,6 jeweils als separate AS-i Slaves 32 für den ersten AS-i Master 4. Die Vorrichtung 3 beansprucht somit im vorgeschalteten System als AS-i Slave 32 zwei AS-i Adressen, über welche sie vom ersten AS-i Master 4 angesprochen werden kann. Die Verarbeitungseinheit 13 der ASi Vorrichtung 3 übernimmt über den ersten Anschluss 1 Funktionen eines AS-i Masters (zweiter AS-i Master 31) und über den zweiten Anschluss 2 Funktion mindestens eines AS-i Slaves 32, im vorliegenden Ausführungsbeispiel Funktionen der ersten und zweiten nachgeschalteten AS-i Slaves 5,6.

Die Anzahl der über den zweiten Anschluss 2 zu repräsentierenden AS-i Slaves hängt von der Anzahl der am ersten Anschluss 1 mit der Vorrichtung verbundenen AS-i Slaves 5,6 ab. Die Vorrichtung 3, insbesondere die Verarbeitungseinheit 13 repräsentiert über ihren zweiten Anschluss 2 soviel AS-i Slaves 32, wie mit ihr über den ersten Anschluss 1 verbundenen sind. Die Anzahl der über den zweiten Anschluss 2 durch die Vorrichtung 3 repräsentierten Slaves 32 entspricht somit der Anzahl der nachgeschalteten AS-i Slave 5,6. Je nachgeschalteten AS-i Slaves 5,6 emuliert die Vorrichtung, insbesondere die Verarbeitungseinheit 13, eine spezifische AS-i Adresse für das vorgeschaltete System (den ersten AS-i Master 4), so dass über diese AS-i Adresse der nachgeschaltete AS-i Slave 5,6 repräsentiert werden kann. Durch die Vorrichtung selbst werden somit die nachgeschalteten AS-i Slaves 5,6 über den zweiten Anschluss nachgebildet und somit repräsentiert.

Im vorliegenden Beispiel sind zwei AS-i Slaves 5,6 mit der Vorrichtung 3 über den ersten Anschluss 1 verbunden. Der am ersten Anschluss 1 angeschlossen erste und zweite nachgeschaltete AS-i Slave 5,6 sieht in der Vorrichtung 3 einen ASi Master (zweiter AS-i Master 31). Für die Kommunikation mit dem ersten AS-i Master 4 werden durch die Vorrichtung 3 die beiden nachgeschalteten AS-i Slaves 5,6 durch die Verarbeitungseinheit 32 emuliert. Die Kommunikation der Vorrichtung 3 mit dem ersten AS-i Master 4 und den nachgeschalteten AS-i Slaves 5,6 erfolgt jedoch getrennt, so dass unabhängig AS-i Adressen sowie Kommunikationskanäle (Frequenzen) verwendet werden können.

Die Vorrichtung 3 repräsentiert über den zweiten Anschluss 2 den ersten nachgeschalteten AS-i Slave 5 mit der AS-i Adresse "x" und den zweiten nachgeschalteten AS-i Slave 6 mit der ASi Adresse "y". In einem ersten vorgeschalteten Kommunikationszyklus des ersten AS-i Masters 4 wird zunächst die Vorrichtung 3, stellvertretend für die nachgeschalteten AS-i Slaves 5,6, über die AS-i Adresse "x" und "y" mit Nutzdaten vom ersten AS-i Master 4 versorgt.

Diese Nutzdaten werden von der Vorrichtung 3 empfangen und als zweiter AS-i Master 31 an die nachgeschalteten AS-i Slaves 5,6 in einem separaten ersten nachgeschalteten Kommunikationszyklus weitergegeben. Innerhalb des nachgeschalteten Systems weist der erste nachgeschaltete AS-i Slave 5 die AS-i Adresse "z" und der zweite nachgeschaltete AS-i Slave 6 die AS-i Adresse "x" auf. Mittels des ersten nachgeschalteten Kommunikationszyklus werden die von der Vorrichtung 3 als Slave 32 mit der Adresse "x" empfangenen Nutzdaten an die ASi Adresse "z" und somit an den ersten nachgeschalteten Slave 5 übertragen. Innerhalb des gleichen ersten nachgeschalteten Kommunikationszyklus werden die von der Vorrichtung 3 als Slave 32 mit der Adresse "y" empfangenen Nutzdaten an die ASi Adresse "x" und somit an den zweiten nachgeschalteten Slave 5 übertragen. Die Vergabe der AS-i Adressen im vorgeschalteten System (erster Master 4 - Vorrichtung 3) kann somit unabhängig von der Vergabe der AS-i Adressen im nachgeschalteten System (Vorrichtung 3 - nachgeschaltete AS-i Slaves 5,6) erfolgen. Ebenso können unterschiedliche Kommunikationskanäle verwendet werden. Mittels des ersten nachgeschalteten Kommunikationszyklus des zweiten AS-i Masters 31 werden die Nutzdaten der nachgeschalteten AS-i Slaves 5,6 eingelesen und dem korrespondierenden AS-i Slave 32 zugeordnet. Der AS-i Slaves 32 repräsentiert über die AS-i Adresse "x" und "y" die nachgeschalteten AS-i Slaves 5,6 für den ersten AS-i Master 4 und somit für das vorgeschaltete AS-i System.

Während eines zweiten vorgeschalteten Kommunikationszyklus des ersten AS-i Masters 4 werden die eingelesenen Nutzdaten der nachgeschalteten AS-i Slaves 5,6 durch die Vorrichtung 3 an den ersten AS-i Masters 4 ausgegeben. Für die Kommunikation mit dem ersten AS-i Master 4 nutzt die Vorrichtung 3 zum Übertragen der empfangenen Nutzdaten des ersten nachgeschalteten Slaves 5 die Adresse "x" und zum Übertragen der empfangenen Nutzdaten des zweiten nachgeschalteten Slave 6 die Adresse "y".

Die durch die Vorrichtung 3 eingenommene AS-i Adresse ist somit unabhängig von der innerhalb der nachgeschalteten Kommunikation verwendeten AS-i Adresse. Analog zu den AS-i Adressen können für die nachgeschaltete Kommunikation zusätzlich oder alternativ unabhängig von der vorgeschalteten Kommunikation unterschiedliche Kommunikationskanäle verwendet werden.

Die Zuordnung der über den ersten und zweiten Anschluss 1,2 empfangenen und gesendeten Nutzdaten ist in der Verarbeitungseinheit 13 fest hinterlegt oder kann von einem Anwender projektierbar sein. Für die Kommunikation mit den nachgeschalteten AS-i Slaves 5,6 ist die Vorrichtung 3 nicht an die verwendete AS-i Adresse und/oder an den verwendeten Kommunikationskanal der Kommunikation zwischen der Vorrichtung 3 und dem ersten AS-i Master 4 gebunden. Die Vorrichtung 3 nutzt vorzugsweise für die vorgeschaltete und nachgeschaltete Kommunikation unterschiedlich Adressen und/oder Kommunikationskanäle in Hinblick auf den zu repräsentierenden AS-i Slave.

Die Kommunikationskanäle, die im nachgeschalteten System hinzukommen, sind somit völlig unabhängig von den im vorgeschalteten System verwendeten Kanälen. Dem ersten Master 4 ist die Verlängerung des AS-i Systems durch die Vorrichtung 3 nicht bekannt. Er hat nur indirekt Zugriff auf die nachgeschalteten AS-i Slaves 5,6 über die Vorrichtung 3.

Wären z.B. 15 AS-i Slaves über den ersten Anschluss 1 mit der Vorrichtung 3 verbunden, so würde die Vorrichtung 3 über den zweiten Anschluss 2 15 AS-i Slaves für den ersten AS-i Master 4 repräsentieren. Die Verarbeitungseinheit 13 emuliert für den ersten AS-i Master 4 15 AS-i Slaves 32 mit unterschiedlichen AS-i Adressen und kommuniziert mit den 15 nachgeschalteten AS-i Slaves als AS-i Master 31.

Die maximal mögliche Anzahl ($n_{max}$) der zu repräsentierenden AS-i Slaves und somit die Anzahl der am ersten Anschluss 1 anschließbaren AS-i Slaves ist abhängig von der maximal möglich Anzahl ($m_{max}$) an AS-i Slaves, welche an den ersten AS-i Master 4 angeschlossen werden können und der Anzahl (z) der am ersten AS-i Master 4 angeschlossenen AS-i Slaves 7,8 ohne Berücksichtigung der Vorrichtung 3 selbst. Die maximal mögliche Anzahl $n_{max}$ an AS-i Slaves, welche am ersten Anschluss 1 anschließbar und über den zweiten Anschluss 2 repräsentierbar sind, ist wie folgt definiert:

$$n_{max} = m_{max} - z$$

$n_{max}$ = Maximal mögliche Anzahl an AS-i Slaves, welche am ersten Anschluss 1 anschließbar und über den zweiten Anschluss 2 repräsentierbar sind.

$m_{max}$ = Maximal möglich Anzahl an AS-i Slaves, welche an den ersten AS-i Master angeschlossen werden können.

z = Anzahl der am ersten AS-i Master angeschlossenen AS-i Slaves des vorgeschalteten Systems ohne Berücksichtigung der Vorrichtung 3 selbst.

**Patentansprüche**

1. Vorrichtung (3) für ein AS-i System mit einem ersten AS-i Master (4), wobei die Vorrichtung (3) einen ersten und einen zweiten Anschluss (1,2) umfasst und innerhalb des AS-i Systems für einen am ersten Anschluss (1) angeschlossenen nachgeschalteten AS-i Slave (5,6) ein zweiter AS-i Master (31) und für den am zweiten Anschluss (2) angeschlossenen ersten AS-i Master (4) ein AS-i Slave (32) ist, wobei die Vorrichtung (3) derart ausgebildet ist, dass sie den mit ihr über den ersten Anschluss (1) verbundenen nachgeschalteten AS-i Slave (5,6) über den zweiten Anschluss (2) als AS-i Slave (32) repräsentiert.

2. Vorrichtung (3) nach Anspruch 1, wobei die Vorrichtung (3) über den zweiten Anschluss (2) jeweils den mit ihr über den ersten Anschluss (1) verbundenen nachgeschalteten AS-i Slave (5,6) als separaten AS-i Slave (32) repräsentiert.

3. Vorrichtung (3) nach einem der vorhergehenden Ansprüche, wobei die Vorrichtung (3) über den ersten Anschluss (1) eingehende Nutzdaten eines Telegramms des nachgeschalteten AS-i Slaves (5,6) unverändert als AS-i Slave (32) über den zweiten Anschluss (2) ausgibt.

4. Vorrichtung (3) nach einem der vorhergehenden Ansprüche, wobei die Vorrichtung (3) über den zweiten Anschluss (2) eingehende Nutzdaten eines Telegramms des ersten AS-i Masters (4) unverändert als zweiter AS-i Master (31) über den ersten Anschluss (1) ausgibt.

5. Vorrichtung (3) nach einem der vorhergehenden Ansprüche, wobei die Vorrichtung (3) bei einer Kommunikation mit dem zu repräsentierenden AS-i Slave (5,6) eine unterschiedliche AS-i Adresse und/oder einen unterschiedlichen AS-i Kanal verwendet als bei einer Kommunikation mit dem ersten AS-i Master (4).

6. AS-i System mit einem ersten AS-i Master (4), mindestens einem nachgeschalteten AS-i Slave (5,6) und die Vorrichtung (3) nach einem der vorhergehenden Ansprüche, wobei die Vorrichtung (3) für den an den ersten Anschluss (1) angeschlossenen mindestens einen nachgeschalteten AS-i Slave (5,6) ein zweiter AS-i Master (31) und für den an den zweiten Anschluss (2) angeschlossenen ersten AS-i Master (4) ein AS-i Slave (32) ist, wobei die Vorrichtung (3) über den zweiten Anschluss (2) den mit ihr über den ersten Anschluss (1) verbundenen mindestens einen nachgeschalteten AS-i Slave (5,6) als AS-i Slave (32) repräsentiert.

Europäisches
Patentamt

European
Patent Office

Office européen
des brevets

**EUROPÄISCHER RECHERCHENBERICHT**

Nummer der Anmeldung

EP 12 16 1023

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2007 040424 A1 (SEW EURODRIVE GMBH & CO [DE]) 26. Februar 2009 (2009-02-26) * Absätze [0010] - [0036], [0044] - [0079] * | 1-6 | INV. H04L12/40 |
| | ----- | | |
| X | SVEDA M ET AL: "Coupling architectures for low-level fieldbusses", ENGINEERING OF COMPUTER BASED SYSTEMS, 2000. (ECBS 2000). PROCEEDINGS. SEVENTH IEEE INTERNATIONAL CONFERENCE AND WORKSHOPON THE EDINBURGH, UK 3-7 APRIL 2000, LOS ALAMITOS, CA, USA,IEEE COMPUT. SOC, US, 3. April 2000 (2000-04-03), Seiten 148-153, XP010376830, DOI: 10.1109/ECBS.2000.839872 ISBN: 978-0-7695-0604-3 * Section .6 "ASI-ASI Coupler: fragmenting gateway"; Seite 152, linke Spalte - Seite 153, linke Spalte * | 1-6 | |
| | ----- | | **RECHERCHIERTE SACHGEBIETE (IPC)** |
| A | FLASCHKA E: "BINARE SENSOREN AM BUS. ÖMIT ASI EINE DURCHGANGIGE DATENUBERTRAGUNG BIS ZUM EINFACHEN SENSOR", ELEKTRONIK, IRL PRESS LIMITED, DE, Bd. 43, Nr. 12, 14. Juni 1994 (1994-06-14), Seiten 64-68, XP000464137, ISSN: 0013-5658 * das ganze Dokument * | 1-6 | H04L |
| | ----- | | |

Der vorliegende Recherchenbericht wurde für alle Patentansprüche erstellt

| Recherchenort | Abschlußdatum der Recherche | Prüfer |
|---|---|---|
| München | 22. Juni 2012 | Köppl, Martin |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

...................................................................................................
& : Mitglied der gleichen Patentfamilie, übereinstimmendes
    Dokument

EPO FORM 1503 03.82 (P04C03)

| Im Recherchenbericht angeführtes Patentdokument | Datum der Veröffentlichung | Mitglied(er) der Patentfamilie | | Datum der Veröffentlichung |
|---|---|---|---|---|
| DE 102007040424 A1 | 26-02-2009 | AT | 529790 T | 15-11-2011 |
| | | DE | 102007040424 A1 | 26-02-2009 |
| | | DK | 2195713 T3 | 21-11-2011 |
| | | EP | 2195713 A1 | 16-06-2010 |
| | | WO | 2009027060 A1 | 05-03-2009 |